# EUROPÄISCHE PATENTSCHRIFT

(11) **EP 4 205 253 B1**
(45) Veröffentlichungstag und Bekanntmachung des Hinweises auf die Patenterteilung: **12.02.2025**
(21) Anmeldenummer: 21769985.9
(22) Anmeldetag: 31.08.2021
(51) Int. Cl.: H02J 3/38, H02M 1/00

(54) **VERFAHREN ZUM EINSTELLEN EINER LEISTUNGSKLASSE EINES WECHSELRICHTERS UND WECHSELRICHTER**
METHOD FOR SETTING A POWER CLASS OF AN INVERTER, AND INVERTER
PROCÉDÉ DE RÉGLAGE D'UNE CLASSE DE PUISSANCE D'UN ONDULEUR ET ONDULEUR

(30) Priorität: 31.08.2020 DE 102020122705
(43) Veröffentlichungstag der Anmeldung: 05.07.2023
(73) Patentinhaber: SMA Solar Technology AG, 34266 Niestetal (DE)
(72) Erfinder: VIOTTO, Michael, 34128 Kassel (DE); THIEL, Raimund, 34596 Bad Zwesten (DE)
(86) Internationale Anmeldenummer: PCT/EP2021/074017
(87) Internationale Veröffentlichungsnummer: WO 2022/043582

(56) Entgegenhaltungen:
- DE-A1- 102014 226 620

## Beschreibung

Die Erfindung betrifft ein Verfahren zum Einstellen einer Leistungsklasse eines Wechselrichters und einen Wechselrichter.

Wechselrichter sind leistungselektronische Geräte, die zur Umwandlung von Gleichspannung in Wechselspannung und umgekehrt eingerichtet sind. Die Wechselrichter eines bestimmten Typs sind in der Regel in unterschiedlichen Leistungsklassen verfügbar. Wechselrichter unterschiedlicher Leistungsklassen sind für unterschiedliche Leistungen ausgelegt. Die Auswahl eines Wechselrichters mit für eine bestimmte Anwendung passender Leistung wird somit vereinfacht.

Wechselrichter können z. B. die Gleichspannung aus Solarmodulen in Wechselspannung zur Einspeisung in ein Energieversorgungsnetz umwandeln. Der Wechselrichter, auch PV-Wechselrichter genannt, ist damit Teil einer Photovoltaikanlage (PV-Anlage). Eine PV-Anlage kann dabei mehrere PV-Generatoren aufweisen. Durch das Zur-Verfügung-Stellen unterschiedlicher Leistungsklassen kann ein Kundenwunsch nach einem Wechselrichter mit passender Leistung für unterschiedliche PV-Anlagen und/oder PV-Generatoren erfüllt werden.

Für eine einfache Organisation der Produktion und Bauteilbeschaffung wird aber unter Umständen eine möglichst geringe Anzahl von unterschiedlichen Varianten von Wechselrichtern eines bestimmten Typs gewünscht. Der Kundenwunsch nach einer möglichst großen Auswahl an Leistungsklassen und eine effektive Geräteproduktion können somit im Widerspruch stehen. Gelöst werden kann dieses Problem z. B. durch eine möglichst späte Festlegung der Geräteleistung in der Produktion oder ggf. später bei der Installation oder Inbetriebnahme. Die Wechselrichter eines Typs können dabei technisch weitgehend oder vollständig identisch sein und sich durch die Leistungseinstellung, z. B. durch Software, und das der eingestellten Leistung entsprechendem Typenschild unterscheiden. Das Einstellen der Leistung und das Anbringen des Typenschildes können am Ende der Produktion durchgeführt werden, so dass die meisten Produktionsschritte für alle Leistungsklassen identisch ablaufen können.

Für die Lagerhaltung beim Hersteller, dem Großhändler und/oder dem Installateur können weiterhin die Geräte in unterschiedlichen Leistungsklassen existieren. Die Vorteile durch die technische Gleichheit der Leistungsklassen werden somit überwiegend in der Produktion genutzt. Grund dafür ist die Festlegung der Geräteleistung am Ende der Produktion. Eine Verschiebung der Leistungseinstellung auf den Zeitpunkt der Installation würde eine weitere Vereinfachung der Logistik für den Großhändler, den Installateur und den Hersteller bedeuten.

In Sicherheitsnormen für PV-Wechselrichter wird gefordert, dass ein Typenschild die Leistung und davon abhängige Größen wie den maximalen Netzstrom angibt. Die Leistung des Geräts ist wesentlich für die Auslegung der Leitungen und Sicherungen in der Anlage und darüber hinaus Basis für die Erlaubnis zur Netzeinspeisung durch den Netzbetreiber. Es muss also sichergestellt werden, dass auch bei Festlegung der Leistung zum Installationszeitpunkt die Leistungsangabe auf dem Typenschild mit der tatsächlichen Leistung des Geräts übereinstimmt. Hierbei ist auch ein Schutz gegen Missbrauch erforderlich.

In der Schrift DE 10 2015 101 684 A1 wird der Einsatz von RFID-Etiketten als Teil eines variablen Typenschilds vorgeschlagen. Die Leistung ist im RFID-Aufkleber kodiert und entspricht dem Aufdruck. Dieser Aufkleber wird bei der Installation angebracht. Der Wechselrichter enthält ein RFID-Lesegerät, das bei jedem Betriebsstart die Daten des RFID-Aufklebers ausliest und die ausgelesene Leistung einstellt. Auf diese Weise wird sichergestellt, dass die auf dem Typenschild angezeigte Leistung zur tatsächlichen Leistung des Geräts passt.

Ein Nachteil dieses Verfahrens ist der technische Aufwand für das im Wechselrichter integrierte RFID-Lesegerät. Darüber hinaus schränkt der Einsatz dieser Technologie die Wahl des Gehäusematerials ein. RFID basiert auf Funk und das Gehäuse darf nicht abschirmend für die RFID-Kommunikationsfrequenz wirken.

In dem Dokument EP 3 438 009 A1 ist ein Verfahren offenbart, bei dem ein bereits verpackter Wechselrichter kommissioniert werden kann, indem der Verpackung ein Typenschild, sowie ein Gerät zur Konfiguration des Wechselrichters nach der Installation beigelegt wird.

Weiterhin zeigt das Dokument DE 10 2014 226 620 A1 einen elektrohydraulischen Antrieb, bei dem eine angebrachte Typenkennung per Smartphone ausgelesen wird, und ein der Typenkennung eindeutig zugeordneter Parametersatz zum Betrieb des Antriebs diesem übermittelt wird. Ziel ist es, eine fehlerhafte Übertragung von Parametern und dadurch verursachte Schäden zu verhindern.

Der Erfindung liegt die Aufgabe zugrunde, die Einstellung der Leistungsklasse von Wechselrichtern effizient zu handhaben.

Die Aufgabe wird durch ein Verfahren mit den Merkmalen des Patentanspruchs 1 sowie einen Wechselrichter mit den Merkmalen des Patentanspruchs 14 gelöst. Bevorzugte Ausführungsformen sind in den abhängigen Patentansprüchen angegeben.

Ein Wechselrichter weist ein Gerätetypenschild auf, das gerätespezifische Informationen des Wechselrichters enthält, die von der gewählten Leistungsklasse unabhängig sind. Der Wechselrichte weist außerdem ein Klassenschild auf, das aus einer Mehrzahl von leistungsklassenspezifischen, jeweils einer Leistungsklasse einer Mehrzahl von Leistungsklassen zugeordneten Klassenschildern ausgewählt ist. Das Klassenschild enthält Informationen über die dem Wechselrichter zugeordnete Leistungsklasse. Die zugeordnete Leistungsklasse ist dabei die Leistungsklasse, auf die der Wechselrichter eingestellt werden soll.

Das Verfahren zum Einstellen der Leistungsklasse des Wechselrichters umfasst die folgenden Schritte:
- bildliches Erfassen des Gerätetypenschilds und des Klassenschilds und Auslesen der gerätespezifischen Informationen und der Informationen über die zugeordnete Leistungsklasse aus den bildlich erfassten Daten, also aus dem erfassten Bild oder aus den erfassten Bildern,
- Übermitteln einer Einstellsequenz an den Wechselrichter, wobei die Einstellsequenz die Informationen über die zugeordnete Leistungsklasse aufweist,
- Einstellen der Leistungsklasse des Wechselrichters anhand der Einstellsequenz nach einem Authentifizieren der ausgelesenen Informationen.

Bevorzugt erfolgt das bildliche Erfassen des Gerätetypenschildes und des Klassenschildes gemeinsam, d. h. mit einer optischen Aufnahme. Die bildliche Erfassung kann beispielsweise über eine Kamera eines mobilen Gerätes, z. B. eines Smartphones, erfolgen.

In einer Ausführungsform weist der Wechselrichter eine Steuerung auf, die leistungselektronische Schalter ansteuert, über die die eingangsseitige Gleichspannung in Wechselspannung gewandelt werden kann oder umgekehrt. Bevorzugt ist die Steuerung eingerichtet, nach Empfang der Einstellsequenz die Leistungsklasse des Wechselrichters einzustellen, beispielsweise durch softwaremäßige Konfigurierung des auf der Recheneinrichtung der Steuerung ausführbaren Programmcodes.

Die Übermittlung der Einstellsequenz an den Wechselrichter kann auf akustischem, mechanischem, optischem, direkt elektrischem oder anderem, insbesondere drahtlosem Weg erfolgen. Beispiele für mögliche Übertragungswege sind: RFID, Kamera im Wechselrichter, Barcode-Scanner im Wechselrichter, Mikrofon, Erschütterungssensor, Photodiode, Bluetooth, WLAN, Ethernet, RS485, USB-Stick, Speicherkarte, usw. Die Übermittlung der Einstellsequenz an den Wechselrichter erfolgt bevorzugt nach Prüfung, ob eine Kombination der gerätespezifischen Informationen und der Informationen über die zugeordnete Leistungsklasse eine zulässige Kombination ist.

Die Erfindung ermöglicht es, eine Einstellung der Leistungsklasse eines Wechselrichters, ausgewählt unter einer Mehrzahl von Leistungsklassen, in denen der Wechselrichter betreibbar ist, bei der Installation so einzustellen, insbesondere dauerhaft so einzustellen, dass sichergestellt ist, dass die eingestellte Leistungsklasse normenkonform den eindeutigen Angaben von auf dem Wechselrichter angebrachter Beschilderung entspricht. Dies geschieht unter Verwendung eines zweiteiligen Schildes für den Wechselrichter. Das zweiteilige Schild umfasst als einen Teil ein Gerätetypenschild und als anderen Teil ein Klassenschild. Das Gerätetypenschild wird bevorzugt während der Produktion dauerhaft angebracht. Es enthält alle nicht leistungsvariablen Informationen über den Wechselrichter vorzugsweise auch in menschenlesbarer Form, z. B. Klarschrift. Darüber hinaus enthält das Gerätetypenschild einen auf Sicht auslesbaren Code, bevorzugt einen visuell durch einen Computer auslesbaren Code, z.B. QR-Code oder Strichcode, der das Gerät identifiziert. Die Identifikation des Gerätes kann z. B. die Seriennummer und/oder die Typbezeichnung umfassen.

Das Klassenschild umfasst leistungsvariable Informationen des Wechselrichters und wird bevorzugt in mehreren Varianten dem Wechselrichter beigelegt. Die Informationen des Klassenschildes sind bildlich auslesbar, z. B. in Form eines QR-Codes, und umfassen Informationen über die Leistungsklasse des Wechselrichters. Die leistungsvariablen Informationen des Klassenschildes liegen dabei vorzugsweise zusätzlich auch in menschenlesbarer Form, z. B. in Klarschrift, vor.

Das Klassenschild wird bevorzugt bei der Installation am Wechselrichter angebracht. In einer Ausführungsform kann vor dem bildlichen Auslesen das Auswählen des Klassenschilds aus der Mehrzahl von Klassenschildern und das Anbringen, insbesondere dauerhafte Anbringen, des Klassenschilds an dem Wechselrichter erfolgen. Diese Schritte des Auswählens und Anbringens können beispielsweise bei der Installation des Wechselrichters und vor seiner Inbetriebnahme durch den Installateur erfolgen. Das Anbringen des Klassenschildes kann beispielsweise durch Aufkleben des Klassenschildes erfolgen. Unter dauerhaftem Anbringen wird verstanden, dass das Schild nicht zerstörungsfrei wieder abgelöst werden kann.

Durch das Verfahren kann sichergestellt werden, dass der Wechselrichter mit der Beschilderung, die ein Klassenschild aufweist, das eine bestimmte Leistung angibt, tatsächlich diese Leistung einhält. Die vorgeschlagene Lösung ist sicherer als die Einstellung durch den Installateur, denn sie stellt besser sicher, dass die Leistung auf dem Typenschild zur tatsächlichen Leistung passt. Die Situation, dass der Installateur einen falschen Aufkleber anbringt und damit aus Versehen ein normativ nicht zugelassenes Gerät erzeugt, wird vermieden. Außerdem kann ggf. sichergestellt werden, dass eine PV-Anlage, zu der der Wechselrichter gehören kann, zu den Angaben passt, mit denen sie beim Netzbetreiber angemeldet wurde.

Ein erfindungsgemäßes Authentifizieren der bildlich ausgelesenen Informationen erfolgt, bevor die Leistungsklasse des Wechselrichters eingestellt wird. Authentifizieren bedeutet in diesem Zusammenhang, dass die korrekte Herkunft und/oder die Korrektheit des Inhalts überprüft wird. Das Authentifizieren kann z. B. durch kryptographische Verfahren, z. B. durch die App, geprüft werden, indem eine Signatur der bildlich ausgelesenen Informationen überprüft wird. Beispielsweise kann die Erzeugung der Einstellsequenz erst nach der Authentifizierung erfolgen. Das Authentifizieren kann optional eine Abfrage einer Datenbank über eine Datenfernverbindung umfassen, wo die bildlich erfassten Informationen z. B. mittels einer Datenbankabfrage überprüft werden können. Die Datenbank kann insbesondere eine Liste zulässiger Kombinationen von gerätespezifischen Informationen und Informationen über die zugeordnete Leistungsklasse aufweisen, so dass sichergestellt werden kann, dass eine unzulässige Kombination von Typenschild und Klassenschild erkannt wird, in welchem Fall keine Einstellsequenz erzeugt wird.

Die Einstellsequenz weist bevorzugt zusätzliche Sicherheitsmerkmale auf, die sich aus dem Gerätetypenschild und dem Klassenschild nicht oder nicht direkt erschließen lassen. Der Wechselrichter kann diese Sicherheitsmerkmale bevorzugt überprüfen. Die Sicherheitsmerkmale können beispielsweise der Authentifizierung dienen und z. B. eine Verschlüsselung und/oder Signatur umfassen. Dies erhöht die Sicherheit weiter.

Im Fall einer erfolgreichen Authentifizierung kann dann die Einstellsequenz mit einem Authentifizierungsabschnitt, einem Wechselrichteridentifikationsabschnitt und einem Leistungsklassenabschnitt an den Wechselrichter übertragen werden, wobei der Wechselrichter den Authentifizierungsabschnitt und den Wechselrichteridentifikationsabschnitt prüft, bevor eine im Leistungsklassenabschnitt enthaltene Leistungsklasse eingestellt, insbesondere dauerhaft eingestellt, wird. Der Authentifizierungsabschnitt kann dabei insbesondere eine Signatur enthalten, die durch den Wechselrichter geprüft wird.

Erfindungsgemäß wird die Einstellsequenz vor dem Übermitteln an den Wechselrichter aus den gerätespezifischen Informationen und den Informationen über die zugeordnete Leistungsklasse generiert. Die Generierung kann z. B. auf dem gleichen Gerät wie das bildliche Erfassen des Gerätetypenschildes und des Klassenschildes erfolgen. Alternativ oder zusätzlich kann die Generierung der Einstellsequenz in einer Zentrale erfolgen, die mit dem Gerät, über das die bildliche Erfassung erfolgt, in Kommunikationsbeziehung über eine Datenfernverbindung, z. B. über Internet und/oder Mobilfunk, steht. Eine Zentrale kann beispielsweise ein Rechenzentrum sein, das vom Hersteller des Wechselrichters betrieben wird und vorzugsweise eine Datenbank aufweist und z. B. in der Cloud angeordnet ist. In einer Weiterbildung kann das mobile Gerät, z. B. Smartphone, die Daten übermitteln und in der Zentrale kann z. B. eine verschlüsselte und/oder signierte geräteindividuelle Einstellsequenz auf Basis der Kenntnis eines nicht öffentlichen Geheimnisses erzeugt werden. Bevorzugt ist der Zugriff auf die Einrichtungen der Zentrale nur nach vorher festgestellter Identität und Autorisierung möglich. Alternativ oder zusätzlich kann die verschlüsselte und/oder signierte Einstellsequenz direkt auf dem mobilen Gerät erzeugt werden.

In einer Ausführungsform weist der Wechselrichter Strukturen zur Verhinderung der Manipulation des angebrachten Klassenschilds auf. Dies kann z. B. so geschehen, dass das Klassenschild mechanisch so auf dem Wechselrichter angebracht wird, dass eine Entfernung zu sichtbaren Schäden führen würde. Damit ist eine Manipulation erkennbar. Ein solches mechanisches Anbringen kann z. B. mit nicht lösbaren Rasthaken erfolgen. Es kann auch dadurch erfolgen, dass sich bereits Angaben zu allen Leistungsklassen auf dem Gerätetypenschild befinden und die nicht zutreffenden entfernt werden, indem sie z.B. an Sollbruchstellen abgebrochen werden. Es kann auch dadurch erfolgen, dass sich bereits Angaben zu allen Leistungsklassen auf dem Gerätetypenschild befinden und die nicht zutreffenden abgedeckt werden, z.B. durch Abdeckplatten mit nicht lösbaren Rasthaken.

Vorteilhaft erfolgt das bildliche Erfassen auf einem mobilen Gerät, das mit kryptographischen Funktionen ausgestattet ist. Dies kann z. B. durch den Einsatz eines Smartphones mit einer App und Kryptografie realisiert werden. Hierdurch kann Missbrauch verhindert werden, wenn wie z. B. in Ländern die Anforderungen an Wechselrichter und die Kosten für den Netzzugang mit der Leistung von Wechselrichtern steigen. Auch kann eine unautorisierte Erhöhung der Leistung verhindert werden. Insbesondere soll eine unautorisierte Erhöhung der Leistung nach Abnahme der Anlage durch den Netzbetreiber verhindert werden.

In einer Ausführungsform scannt der Installateur nach Installation des Wechselrichters und Anbringung des Klassenschilds z. B. die Codes von Gerätetypenschild und Klassenschild mit der App unter Verwendung der Kamera seines Smartphones. Die App überprüft, dass beide Teile des Typenschilds vorhanden sind und sich in der richtigen Lage zueinander befinden. In einer Ausführungsform kann die App dann aus der Information über den Wechselrichtertyp auf dem Gerätetypenschild und der Information zur Leistungsklasse auf dem Klassenschild die verschlüsselte, gesicherten, vom Wechselrichter auf Gültigkeit prüfbare Einstellsequenz zur Leistungsfreischaltung für den Wechselrichter und schickt diesen an den Wechselrichter. Der Wechselrichter prüft diese Einstellsequenz und stellt bei erfolgreicher Prüfung die entsprechende Leistung ein. Bevorzugt wird die Leistung dauerhaft eingestellt, was bedeutet, dass sie nur vom Hersteller und nicht vom Nutzer oder Anlagenbetreiber wieder geändert werden kann. Auf diese Weise kann sichergestellt, dass die Leistung auf dem Schild der tatsächlichen Leistung des Wechselrichters entspricht.

In einer bevorzugten Ausführungsform meldet der Wechselrichter die erfolgreiche Einstellung der Leistung an den Versender der Einstellsequenz zurück. Ebenso kann zurückgemeldet werden, dass eine Leistung nicht erfolgreich eingestellt wurde, wobei gegebenenfalls der Grund für den Misserfolg zusätzlich mitgeteilt werden kann.

In einer bevorzugten Ausführungsform der Erfindung erfolgt das bildliche Erfassen und das Übertragen der Einstellsequenz mit einem gleichen Gerät, insbesondere dem mobilen Gerät, bevorzugt einem Smartphone. Hierdurch wird eine leichte Handhabbarkeit gewährleistet.

Eine Ausführungsform kann ein Prüfen des Zustands der Strukturen zur Verhinderung der Manipulation in dem erfassten Bild umfassen. Z. B. können auf dem mobilen Gerät die Strukturen zur Verhinderung der Manipulation des angebrachten Klassenschilds am Wechselrichter erkannt werden. Z. B. kann die App ausgelegt sein, ein nicht korrekt angebrachtes Klassenschild zu erkennen, das z. B. durch oben genannte mechanische Maßnahmen am Wechselrichter vor Manipulation geschützt wurde. Beispielsweise kann die Erzeugung der Einstellsequenz unterbleiben, wenn ein Prüfen des Zustands der Strukturen in dem erfassten Bild ergibt, dass eine Manipulation vorgenommen wurde.

In einer Ausführungsform kann das Authentifizieren ein Erfassen und Prüfen von Informationen über die das bildliche Erfassen durchführende Person umfassen. Beispielsweise können Informationen über die durchführende Person erfasst werden und überprüft werden, ob die Person autorisiert ist. Informationen über die durchführende Person können z. B. eine bildliche Erfassung der Person sein oder z. B. das Lesen einer Berechtigungskarte. Beispielsweise kann die Generierung der Einstellsequenz daran geknüpft sein und nur dann erfolgen, wenn die Person als autorisierte Person identifiziert wurde.

In einer Ausführungsform kann das Authentifizieren ein Prüfen umfassen, ob Voraussetzungen für ein Einstellen der Leistungsklasse des Wechselrichters gegeben sind. Die Erzeugung der Einstellsequenz würde vorteilhafterweise erst nach der Validierung eines Vertragsverhältnisses erfolgen. Eine solche Validierung könnte durch Abfrage in einer entfernten Datenbank erfolgen und z. B. umfassen: Bezahlung erfolgt, es existiert ein gültiger Rahmenvertrag, Autorisierung zur Freischaltung liegt vor, usw. Zur Validierung könnten diese Informationen mit Informationen über den Anfragenden, z. B. die Identität der PV-Anlage, die Rolle des Anfragenden und/oder seine Identität oder ähnlichem verknüpft werden. Insbesondere kann auch überprüft werden, ob die einzustellende Leistungsklasse der bestellten und damit bezahlten entspricht. Bei der Erzeugung der Einstellsequenz in der Zentrale mit Datenbank kann eine Prüfung auf die Bezahlung der eingestellten Leistung erfolgen. Falls der Preis für einen Wechselrichter abhängig von der Leistung und der Bezahlung der eingestellten Leistung ist, kann dies vor ihrer Freigabe und vor der Generierung des Einstellcodes geprüft werden. Hierfür kann ein weiterer Code genutzt werden, der von der Zentrale z. B. per Datenfernübertragung an den Wechselrichter übermittelt wird. All dies kann im Rahmen zur Zulässigkeitsprüfung der Kombination von gerätespezifischer Information und Information über die zugeordnete Leistungsklasse mit geprüft werden. In einer Variante des Verfahrens kann bei der Generierung der Einstellsequenz ein Bezahlvorgang auch automatisch ausgelöst werden, wobei der Preis der in der Einstellsequenz enthaltenen Leistungsklasse entspricht.

Mit diesem Verfahren ist eine kostengünstige und sichere Einstellung der Leistung nach der Produktion und bei der Installation des Wechselrichters möglich. Die Logistik kann auf diese Weise vereinfacht werden.

In einer Weiterbildung kann zur weiteren Erhöhung der Sicherheit vorgesehen werden, dass der Wechselrichter ohne die Einstellung der Leistungsklasse keine elektrische Leistung ausgibt.

In einer weiteren Ausführungsform kann vorteilhafterweise nach Einstellung der Leistungsklasse diese nicht nachträglich durch den Installateur geändert werden, sondern z. B. nur durch den Hersteller des Wechselrichters.

In einer Ausführungsform kann das Übertragen der Einstellsequenz über einen von einem für das bildlichen Erfassen verwendeten Gerät unabhängigen Übertragungsweg erfolgen, z. B. von der Zentrale über Datenfernkommunikation an den Wechselrichter.

In einer bevorzugten Ausführungsform wird die Einstellsequenz vor dem Übermitteln an den Wechselrichter verschlüsselt, um die Geheimhaltung sicherzustellen, und/oder signiert, um die Authentizität sicherzustellen. Der Wechselrichter führt hierdurch eine Authentifizierung der übermittelten Einstellsequenz durch. Hierdurch wird erreicht, dass die Einstellsequenz nur von dem vorgesehenen Wechselrichter zur Einstellung einer Leistungsklasse akzeptiert wird.

Ein Wechselrichter mit einer einstellbaren Leistungsklasse weist ein Gerätetypenschild auf, das gerätespezifische Informationen des Wechselrichters enthält, die von der Leistungsklasse unabhängig sind. Der Wechselrichter weist weiter ein Klassenschild auf, das aus einer Mehrzahl von leistungsklassenspezifischen, jeweils einer Leistungsklasse der Mehrzahl von Leistungsklassen zugeordneten Klassenschildern ausgewählt ist, und das Informationen über die zugeordnete Leistungsklasse enthält. Bevorzugt sind das Gerätetypenschild und das Klassenschild so auf dem Wechselrichter angeordnet, dass sie gemeinsam bildlich auslesbar sind. Der Wechselrichter weist weiter einen Empfänger auf, der eingerichtet ist, eine verschlüsselte und/oder signierte Einstellsequenz zu empfangen, welche die Informationen über die zugeordnete Leistungsklasse aufweist. Eine Steuerung des Wechselrichters ist eingerichtet, die verschlüsselte Einstellsequenz zu entschlüsseln und/oder die signierte Einstellsequenz zu authentifizieren und die Leistungsklasse des Wechselrichters anhand der Einstellsequenz einzustellen.

Im Folgenden wird die Erfindung anhand in den Figuren dargestellter Ausführungsbeispiele weiter erläutert und beschrieben.
Fig. 1 zeigt schematisch ein Verfahren zum Einstellen einer Leistungsklasse eines Wechselrichters;
Fig. 2 zeigt schematisch den Wechselrichter mit mobilem Gerät und
Fig. 3 zeigt schematisch ein Gerätetypenschild sowie mehrere Klassenschilder.

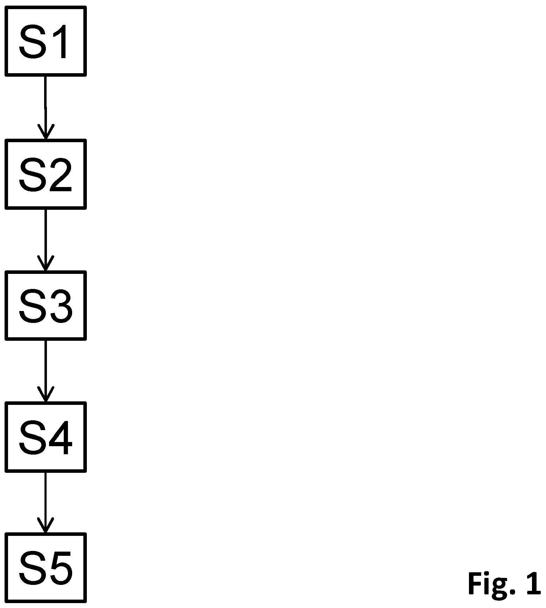

Fig. 1 zeigt schematisch Schritte eines Verfahrens zum Einstellen einer Leistungsklasse eines Wechselrichters.

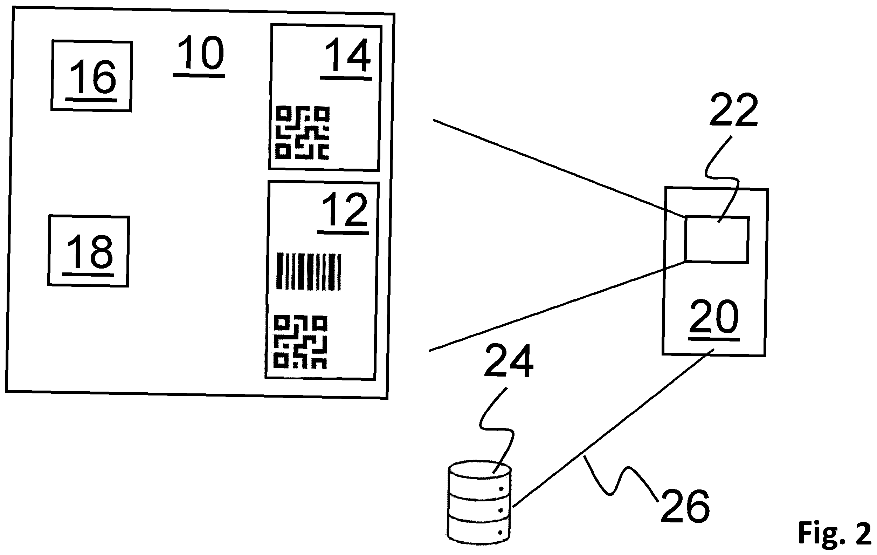

In Schritt S1 wird ein Klassenschild 14 (Fig. 2) aus einer Mehrzahl von Klassenschildern 14.1, 14.2, 14.3, 14.4 (Fig. 2) ausgewählt und an einem Wechselrichter 10 (Fig. 2) angebracht.

In Schritt S2 werden ein auf dem Wechselrichter 10 angebrachtes Gerätetypenschild 12 (Fig. 2) und das Klassenschild 14 (Fig. 2) bildlich erfasst und gerätespezifische Informationen und Informationen über die zugeordnete Leistungsklasse aus den erfassten Daten, also dem erfassten Bild oder den erfassten Bildern, ausgelesen.

In Schritt S3 werden die ausgelesenen Informationen authentifiziert. Das Authentifizieren umfasst dabei bevorzugt ein Prüfen, ob Voraussetzungen für ein Einstellen der Leistungsklasse des Wechselrichters 10 gegeben sind. Dieses Prüfen kann z. B. ein Abfragen einer entfernt vom Wechselrichter angeordneten Datenbank 24 über Datenfernübertragung 26 beinhalten. Z. B. kann mit der Datenbankabfrage ermittelt werden, ob für die auf dem Klassenschild 14 angegebene Leistungsklasse auch bezahlt wurde.

In Schritt S4 wird eine Einstellsequenz an den Wechselrichter 10 übermittelt, wobei die Einstellsequenz die Informationen über die dem Wechselrichter 10 zugeordnete Leistungsklasse, die eingestellt werden soll, aufweist.

In Schritt S5 wird die Leistungsklasse des Wechselrichters 10 anhand der Einstellsequenz eingestellt.

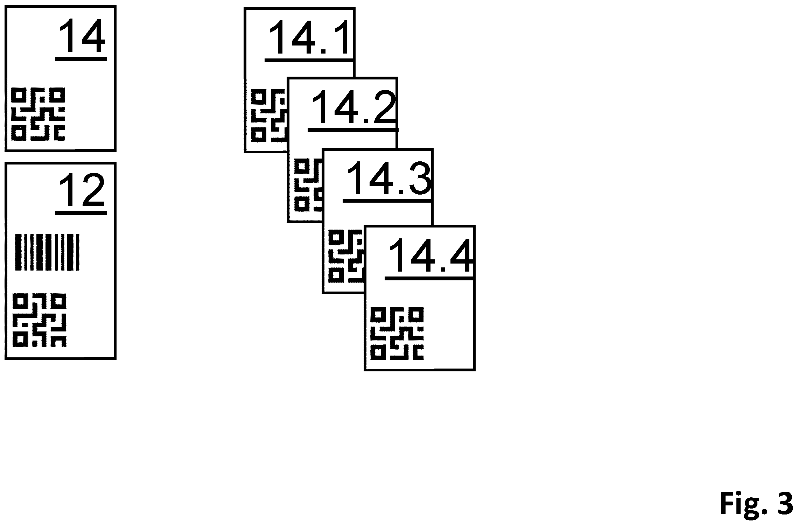

In Fig. 2 ist schematisch ein Wechselrichter 10 mit einstellbarer Leistungsklasse dargestellt. Der Wechselrichter 10 weist ein Gerätetypenschild 12 auf, das gerätespezifische Informationen des Wechselrichters 10 enthält, die von der Leistungsklasse unabhängig sind. Der Wechselrichter 10 weist außerdem ein Klassenschild 14 auf, das aus einer Mehrzahl von leistungsklassenspezifischen, jeweils einer Leistungsklasse der Mehrzahl von Leistungsklassen zugeordneten Klassenschildern 14.1, 14.2, 14.3, 14.4 (Fig. 3) ausgewählt ist, und das Informationen über die zugeordnete Leistungsklasse enthält. Das Gerätetypenschild 12 und das Klassenschild 14 des Wechselrichters 10 sind bildlich auslesbar. Die Informationen des Gerätetypenschildes sind bevorzugt in Form von maschinenlesbaren Bildcodes, wie z. B. Barcodes oder QR-Codes, auf den Schildern 12, 14 angebracht. Alternativ oder zusätzlich können die gleichen Informationen in menschenlesbarer Form auf den Schildern angebracht sein.

Bevorzugt sind das Gerätetypenschild 12 und das Klassenschild 14 so auf dem Wechselrichter 10 angeordnet, dass sie gemeinsam bildlich auslesbar sind. Der Wechselrichter 10 weist einen Empfänger 16 auf, der eingerichtet ist, eine verschlüsselte und/oder signierte Einstellsequenz zu empfangen, welche die Informationen über die zugeordnete Leistungsklasse aufweist. Der Wechselrichter 10 weist eine Steuerung 18 auf, die eingerichtet ist, die verschlüsselte Einstellsequenz zu entschlüsseln und/oder die signierte Einstellsequenz zu authentifizieren und die Leistungsklasse des Wechselrichters 10 anhand der Einstellsequenz einzustellen.

Ein mobiles Gerät 20 weist eine Kamera 22 auf, die eingerichtet ist, das Gerätetypenschild 12 und das Klassenschild 14 bildlich zu erfassen, bevorzugt gemeinsam bildlich zu erfassen. Hierfür können Codes, wie z. B. Barcodes und/oder QR-Codes, ausgelesen werden. Alternativ oder zusätzlich kann menschenlesbare Information erfasst und durch eine programmierte Schaltung, z. B. mittels einer App, des mobilen Gerätes 20, erfasst werden. Ein Beispiel hierfür ist OCR (Optical Character Recognition) zur Texterkennung.

Das mobile Gerät ist über eine Datenfernverbindung 26, z. B. Mobilfunk und/oder das Internet, mit einer Datenbank 24 verbunden. Über die Datenbank kann z. B. die bildlich erfasste Information authentifiziert und damit verifiziert werden.

In Fig. 3 sind schematisch ein Gerätetypenschild 12 und ein Klassenschild 14 dargestellt, wie sie z. B. auf einem Wechselrichter 10 angeordnet sein können. Sind sie in der dargestellten Art angeordnet, so können sie gemeinsam bildlich ausgelesen werden, was das Verfahren beschleunigt und die Sicherheit des Verfahrens weiter erhöht. Das Gerätetypenschild 12 enthält gerätespezifische Informationen des Wechselrichters 10, die von der Leistungsklasse unabhängig sind. In Schritt S1 des Verfahrens (Fig. 1) wird das Klassenschild 14 aus einer Mehrzahl von Klassenschildern 14.1, 14.2, 14.3, 14.4 ausgewählt. Jedes der Klassenschilder 14.1, 14.2, 14.3, 14.4 ist leistungsklassenspezifisch, d. h. es ist jeweils einer Leistungsklasse zugeordnet, auf die der Wechselrichter 10 eingestellt werden kann. Bevorzugt weist der Wechselrichter 10 für jede Leistungsklasse, auf die er einstellbar ist, ein zugeordnetes Klassenschild 14.1, 14.2, 14.3, 14.4 auf. Bevorzugt ist die Mehrzahl an Klassenschildern 14.1, 14.2, 14.3, 14.4 dem Lieferumfang des Wechselrichters beigelegt, so dass bei der Installation, dasjenige, das der einzustellenden Leistungsklasse entspricht, ausgewählt und am Wechselrichter 10 angebracht werden kann.

## Patentansprüche

1. Verfahren zum Einstellen einer Leistungsklasse eines Wechselrichters (10), wobei der Wechselrichter (10) ein Gerätetypenschild (12) aufweist, das gerätespezifische Informationen des Wechselrichters (10) enthält, die von der gewählten Leistungsklasse unabhängig sind, und wobei der Wechselrichter (10) ein Klassenschild (14) aufweist, das aus einer Mehrzahl von leistungsklassenspezifischen, jeweils einer Leistungsklasse einer Mehrzahl von Leistungsklassen zugeordneten Klassenschildern (14.1, 14.2, 14.3, 14.4) ausgewählt ist, und das Informationen über die zugeordnete Leistungsklasse enthält, wobei das Verfahren die Schritte umfasst:
- bildliches Erfassen des Gerätetypenschilds (12) und des Klassenschilds (14) und Auslesen der gerätespezifischen Informationen und der Informationen über die zugeordnete Leistungsklasse aus den bildlich erfassten Daten,
- Übermitteln einer Einstellsequenz an den Wechselrichter (10), wobei die Einstellsequenz die Informationen über die zugeordnete Leistungsklasse aufweist,
- Einstellen der Leistungsklasse des Wechselrichters (10) anhand der Einstellsequenz nach einem Authentifizieren der ausgelesenen Informationen,
wobei die Einstellsequenz vor dem Übermitteln an den Wechselrichter (10) aus den gerätespezifischen Informationen und den Informationen über die zugeordnete Leistungsklasse generiert wird.

2. Verfahren nach Anspruch 1, wobei vor dem bildlichen Auslesen das Auswählen des Klassenschilds (14) aus der Mehrzahl von Klassenschildern (14.1, 14.2, 14.3, 14.4) und das Anbringen, insbesondere dauerhafte Anbringen, des Klassenschilds (14) an dem Wechselrichter (10), erfolgt.

3. Verfahren nach Anspruch 1oder 2, wobei der Wechselrichter (10) Strukturen zur Verhinderung der Manipulation des angebrachten Klassenschilds (14) umfasst.

4. Verfahren nach einem der vorhergehenden Ansprüche, weiterhin umfassend ein Authentifizieren der übermittelten Einstellsequenz vor dem Einstellen der Leistungsklasse des Wechselrichters (10).

5. Verfahren nach Anspruch 4, wobei das Authentifizieren ein Erfassen und Prüfen von Informationen über die das bildliche Erfassen durchführende Person umfasst.

6. Verfahren nach Anspruch 4 oder 5, wobei das Authentifizieren ein Prüfen umfasst, ob Voraussetzungen für ein Einstellen der Leistungsklasse des Wechselrichters (10) gegeben sind.

7. Verfahren nach Anspruch 6, wobei das Authentifizieren ein Prüfen des Zustands der Strukturen in dem erfassten Bild umfasst.

8. Verfahren nach einem der Ansprüche 4 bis 7, wobei das Authentifizieren eine Abfrage einer Datenbank (24) über eine Datenfernverbindung (26) umfasst.

9. Verfahren nach einem der Ansprüche 4 bis 8, wobei im Fall einer erfolgreichen Authentifizierung die Einstellsequenz mit einem Authentifizierungsabschnitt, einem Wechselrichteridentifikationsabschnitt und einem Leistungsklassenabschnitt an den Wechselrichter (10) übertragen wird, wobei der Wechselrichter (10) den Authentifizierungsabschnitt und den Wechselrichteridentifikationsabschnitt prüft, bevor eine im Leistungsklassenabschnitt enthaltene Leistungsklasse eingestellt, insbesondere dauerhaft eingestellt, wird.

10. Verfahren nach Anspruch 9, wobei das bildliche Erfassen und das Übertragen der Einstellsequenz mit einem gleichen Gerät (20), insbesondere einem Smartphone, erfolgt.

11. Verfahren nach Anspruch 9, wobei das Übertragen der Einstellsequenz über einen von einem für das bildlichen Erfassen verwendeten Gerät (20) unabhängigen Übertragungsweg erfolgt.

12. Verfahren nach einem der vorhergehenden Ansprüche, **dadurch gekennzeichnet, dass** die Einstellsequenz vor dem Übermitteln an den Wechselrichter verschlüsselt und/oder signiert wird.

13. Verfahren nach einem der vorhergehenden Ansprüche, wobei die Übermittlung der Einstellsequenz nach Prüfung erfolgt, ob eine Kombination der gerätespezifischen Informationen und der Informationen über die zugeordnete Leistungsklasse eine zulässige Kombination ist.

14. Wechselrichter (10) mit einer einstellbaren Leistungsklasse, wobei der Wechselrichter ein Gerätetypenschild (12) aufweist, das gerätespezifische Informationen des Wechselrichters (10) enthält, die von der Leistungsklasse unabhängig sind, und wobei der Wechselrichter (10) ein Klassenschild (14) aufweist, das aus einer Mehrzahl von leistungsklassenspezifischen, jeweils einer Leistungsklasse der Mehrzahl von Leistungsklassen zugeordneten Klassenschildern (14.1, 14.2, 14.3, 14.4) ausgewählt ist, und das Informationen über die zugeordnete Leistungsklasse enthält, wobei das Gerätetypenschild (12) und das Klassenschild (14) bildlich auslesbar sind und wobei der Wechselrichter (10)
einen Empfänger (16) aufweist, der eingerichtet ist, eine verschlüsselte und/oder signierte Einstellsequenz zu empfangen, welche auf den gerätespezifischen Informationen und den Informationen über die zugeordnete Leistungsklasse basiert,
und wobei der Wechselrichter (10) eine Steuerung (18) aufweist, die eingerichtet ist,
die verschlüsselte Einstellsequenz zu entschlüsseln und/oder die signierte Einstellsequenz zu authentifizieren und
die Leistungsklasse des Wechselrichters (10) anhand der Einstellsequenz einzustellen.

## Claims

1. A method for setting a power class of an inverter (10), wherein the inverter (10) comprises a device type plate (12) containing device-specific information of the inverter (10), which information is independent of the selected power class, and wherein the inverter (10) comprises a class plate (14) selected from a plurality of power class-specific class plates (14.1, 14.2, 14.3, 14.4) each assigned to one power class from a plurality of power classes and containing information about the assigned power class, wherein the method comprises the steps:
- capturing in image form the device type plate (12) and the class plate (14) and reading out the device-specific information and the information about the assigned power class from the data captured as an image,
- communicating a setting sequence to the inverter (10), wherein the setting sequence comprises the information about the assigned power class,
- setting the power class of the inverter (10) on the basis of the setting sequence after authentication of the information read out,
wherein the setting sequence, before being communicated to the inverter (10), is generated from the device-specific information and the information about the assigned power class..

2. The method as claimed in claim 1, wherein the reading out in image form is preceded by selecting the class plate (14) from the plurality of class plates (14.1, 14.2, 14.3, 14.4) and attaching, in particular permanently attaching, the class plate (14) to the inverter (10).

3. The method as claimed in claim 1 or 2, wherein the inverter (10) comprises structures for preventing the manipulation of the attached class plate (14).

4. The method as claimed in any of the preceding claims, further comprising authenticating the communicated setting sequence before setting the power class of the inverter (10).

5. The method as claimed in claim 5, wherein the authenticating comprises capturing and checking information about the person conducting the capturing in image form.

6. The method as claimed in claim 5 or 6, wherein the authenticating comprises checking whether there are preconditions for setting the power class of the inverter (10).

7. The method as claimed in claim 7, wherein the authenticating comprises checking the state of the structures in the captured image.

8. The method as claimed in any of claims 5 to 8, wherein the authenticating comprises a query of a database (24) via a remote data connection (26).

9. The method as claimed in any of claims 5 to 9, wherein, in the case of a successful authentication, the setting sequence is transmitted with an authentication section, an inverter identification section and a power class section to the inverter (10), wherein the inverter (10) checks the authentication section and the inverter identification section before a power class contained in the power class section is set, in particular set permanently.

10. The method as claimed in claim 10, wherein the capturing in image form and the transmitting of the setting sequence are effected by one and the same device (20), in particular a smartphone.

11. The method as claimed in claim 10, wherein the setting sequence is transmitted by way of a transmission means which is independent of a device (20) used for the capturing in image form.

12. The method as claimed in any of the preceding claims, **characterized in that** the setting sequence is encrypted and/or signed before being communicated to the inverter.

13. The method as claimed in any of the preceding claims, wherein the communication of the setting sequence is effected after checking whether a combination of the device-specific information and the information about the assigned power class is a permissible combination.

14. An inverter (10) with a settable power class, wherein the inverter comprises a device type plate (12) containing device-specific information of the inverter (10), which information is independent of the power class, and wherein the inverter (10) comprises a class plate (14) selected from a plurality of power class-specific class plates (14.1, 14.2, 14.3, 14.4) each assigned to one power class from the plurality of power classes and containing information about the assigned power class, wherein the device type plate (12) and the class plate (14) are readable in image form and wherein the inverter (10) comprises a receiver (16) configured to receive an encrypted and/or signed setting sequence based on the device-specific information and the information about the assigned power class, and wherein the inverter (10) comprises a controller (18) configured to decrypt the encrypted setting sequence and/or to authenticate the signed setting sequence and to set the power class of the inverter (10) on the basis of the setting sequence.

## Revendications

1. Procédé de réglage d'une classe de puissance d'un onduleur (10), dans lequel l'onduleur (10) comprend une plaque de type d'appareil (12) contenant des informations spécifiques à l'appareil de l'onduleur (10), ces informations étant indépendantes de la classe de puissance sélectionnée, et dans lequel l'onduleur (10) comprend une plaque de classe (14) sélectionnée parmi une pluralité de plaques de classe spécifiques à une classe de puissance (14.1, 14.2, 14.3, 14.4), chacune étant affectée à une classe de puissance parmi une pluralité de classes de puissance et contenant des informations sur la classe de puissance affectée, dans lequel le procédé comprend les étapes suivantes :
- capturer sous forme d'image la plaque de type d'appareil (12) et la plaque de classe (14) et lire les informations spécifiques à l'appareil et les informations sur la classe de puissance attribuée à partir des données capturées sous forme d'image,
- communiquer une séquence de réglage à l'onduleur (10), la séquence de réglage comprenant les informations relatives à la classe de puissance attribuée,
- réglage de la classe de puissance de l'onduleur (10) sur la base de la séquence de réglage après authentification des informations lues,
la séquence de réglage, avant d'être communiquée à l'onduleur (10), est générée à partir des informations spécifiques à l'appareil et des informations relatives à la classe de puissance attribuée.

2. Procédé selon la revendication 1, dans lequel la lecture sous forme d'image est précédée de la sélection de la plaque de classe (14) parmi la pluralité de plaques de classe (14.1, 14.2, 14.3, 14.4) et de la fixation, en particulier de la fixation permanente, de la plaque de classe (14) à l'onduleur (10).

3. Procédé selon la revendication 1 ou 2, dans lequel l'onduleur (10) comprend des structures destinées à empêcher la manipulation de la plaque de classe (14) fixée.

4. Procédé selon l'une des revendications précédentes, comprenant en outre l'authentification de la séquence de réglage communiquée avant le réglage de la classe de puissance de l'onduleur (10).

5. Procédé selon la revendication 5, dans lequel l'authentification comprend la capture et la vérification d'informations sur la personne effectuant la capture sous forme d'image.

6. Procédé selon la revendication 5 ou 6, dans lequel l'authentification consiste à vérifier s'il existe des conditions préalables au réglage de la classe de puissance de l'onduleur (10).

7. Procédé selon la revendication 7, dans lequel l'authentification consiste à vérifier l'état des structures dans l'image capturée.

8. Procédé selon l'une des revendications 5 à 8, dans lequel l'authentification comprend l'interrogation d'une base de données (24) par l'intermédiaire d'une connexion de données à distance (26).

9. Procédé selon l'une des revendications 5 à 9, dans lequel, en cas d'authentification réussie, la séquence de réglage est transmise avec une section d'authentification, une section d'identification de l'onduleur et une section de classe de puissance à l'onduleur (10), dans lequel l'onduleur (10) vérifie la section d'authentification et la section d'identification de l'onduleur avant qu'une classe de puissance contenue dans la section de classe de puissance ne soit réglée, en particulier réglée de manière permanente.

10. Procédé selon la revendication 10, dans lequel la capture sous forme d'image et la transmission de la séquence de réglage sont effectuées par un seul et même appareil (20), en particulier un smartphone.

11. Procédé selon la revendication 10, dans lequel la séquence de réglage est transmise par un moyen de transmission indépendant du dispositif (20) utilisé pour la capture sous forme d'image.

12. Procédé selon l'une des revendications précédentes, **caractérisé en ce que** la séquence de réglage est cryptée et/ou signée avant d'être communiquée à l'onduleur.

13. Procédé selon l'une des revendications précédentes, dans lequel la communication de la séquence de réglage est effectuée après avoir vérifié si une combinaison des informations spécifiques à l'appareil et des informations relatives à la classe de puissance attribuée est une combinaison autorisée.

14. Onduleur (10) avec une classe de puissance réglable, dans lequel l'onduleur comprend une plaque de type d'appareil (12) contenant des informations spécifiques à l'appareil de l'onduleur (10), ces informations étant indépendantes de la classe de puissance, et dans lequel l'onduleur (10) comprend une plaque de classe (14) sélectionnée parmi une pluralité de plaques de classe spécifiques à une classe de puissance (14.1, 14.2, 14.3, 14. 4), chacune affectée à une classe de puissance parmi la pluralité de classes de puissance et contenant des informations sur la classe de puissance affectée, dans laquelle la plaque de type d'appareil (12) et la plaque de classe (14) sont lisibles sous forme d'image et dans laquelle l'onduleur (10) comprend un récepteur (16) configuré pour recevoir une séquence de réglage cryptée et/ou signée sur la base des informations spécifiques à l'appareil et des informations sur la classe de puissance affectée, et dans lequel l'onduleur (10) comprend un contrôleur (18) configuré pour décrypter la séquence de réglage cryptée et/ou pour authentifier la séquence de réglage signée et pour régler la classe de puissance de l'onduleur (10) sur la base de la séquence de réglage.
